# EUROPÄISCHE PATENTANMELDUNG

(11) **EP 4 834 711 A1**
(43) Veröffentlichungstag der Anmeldung: **04.11.2026**
(21) Anmeldenummer: 26170874.7
(22) Anmeldetag: 07.04.2026
(51) Int. Cl.: B62D 1/12, G05G 1/04

(54) **PISTENPFLEGEFAHRZEUG**

(30) Priorität: 28.04.2025 DE 102025116246
(71) Anmelder: Kässbohrer Geländefahrzeug AG, 88471 Laupheim (DE)
(72) Erfinder: Henger, Claudius, 72535 Heroldstatt (DE); Behmüller, Andreas, 89171 Illerkirchberg (DE); Hartmann, Daniel, 89168 Niederstotzingen (DE); Huber, Christoph, 87541 Bad Hindelang (DE)
(74) Vertreter: Patentanwälte Ruff, Wilhelm, Beier, Dauster & Partner mbB

(57) **Zusammenfassung**

1. Die Erfindung betrifft ein Pistenpflegefahrzeug zum Pflegen einer Schneepiste.

2.1 Ein derartiges Pistenpflegefahrzeug aufweisend ein Antriebssystem mit einem Kettenfahrwerk, das zum Erzeugen einer Fahrbewegung eingerichtet ist, und eine Fahrerkabine mit einem Fahrersitz und einer Lenkeinrichtung, die seitlich des Fahrersitzes angeordnet und zum manuellen Lenken der Fahrbewegung durch einen Fahrer eingerichtet ist, ist bekannt.

2.2 Erfindungsgemäß weist die Lenkeinrichtung einen Lenkhebel auf, der an einem Schwenklager um eine Schwenkachse schwenkbeweglich gelagert ist, wobei die Schwenkachse horizontal und entlang, vorzugsweise parallel zu, einer Längsachse des Pistenpflegefahrzeugs längserstreckt ist, wodurch der Lenkhebel zum Lenken der Fahrbewegung in einer vertikalen Schwenkebene ausgehend von einer Grundstellung nach links und nach rechts verschwenkt werden kann.

2.3 Verwendung für Pistenraupe

## Beschreibung

Die Erfindung betrifft ein Pistenpflegefahrzeug zum Pflegen einer Schneepiste, aufweisend ein Antriebssystem mit einem Kettenfahrwerk, das zum Erzeugen einer Fahrbewegung eingerichtet ist, und eine Fahrerkabine mit einem Fahrersitz und einer Lenkeinrichtung, die seitlich des Fahrersitzes angeordnet und zum manuellen Lenken der Fahrbewegung durch einen Fahrer eingerichtet ist.

Pistenpflegefahrzeuge sind zivile Kettenfahrzeuge, die zur Pflege von Schneepisten für Wintersportzwecke eingerichtet sind und auch als Pistenraupen bezeichnet werden (englisch: snow groomer).

Der übliche Aufbau solcher Fahrzeuge sieht einen längserstreckten Tragrahmen, ein Antriebssystem mit einem Kettenfahrwerk, eine frontseitig am Tragrahmen angeordnete Fahrerkabine und eine Lenkeinrichtung sowie einen Fahrersitz vor, die jeweils in der Fahrerkabine angeordnet sind. Mittels der Lenkeinrichtung kann der Fahrer das Pistenpflegefahrzeug über die Schneepiste steuern, d. h. die Fahrbewegung lenken. Im Stand der Technik sind Pistenpflegefahrzeuge mit unterschiedlichen Lenkeinrichtungen bekannt.

Zum einen ist es bekannt, die Lenkeinrichtung als klassisches Lenkrad auszubilden, ähnlich wie bei einem Personen- oder Lastkraftwagen. Nachteilig ist, dass das Lenkrad üblicherweise eine zweihändige Bedienung erfordert, wobei aber in der Regel eine Hand des Fahrers mit der Bedienung eines Steuerhebels zum Steuern eines Anbaugeräts des Pistenpflegefahrzeugs beschäftigt ist. Oftmals muss das Lenkrad deshalb einhändig bedient werden, was auf Dauer wenig ergonomisch ist und den Fahrkomfort sowie die Fahrsicherheit beeinträchtigt. Zudem benötigen Lösungen mit Lenkrad vergleichsweise viel Bauraum, da das Lenkrad üblicherweise an einer Lenksäule gelagert ist.

Zum anderen sind Lenkeinrichtungen mit einer Doppelhebel-Anordnung bekannt, die zwei Steuerhebel aufweist, die voneinander unabhängig um eine in Fahrzeugquerrichtung erstreckte Schwenkachse schwenkbeweglich sind. Dabei ist jeweils ein Steuerhebel einer der Ketten des Kettenfahrwerks zugeordnet. Die Stellung des jeweiligen Steuerhebels um die Schwenkachse steuert die Geschwindigkeit der betreffenden Kette. Die Fahrbewegung wird dadurch gesteuert, dass einer der beiden Steuerhebel weniger weit nach vorne oder hinten geführt wird als der andere. Hierdurch ergibt sich ein Geschwindigkeitsunterschied zwischen den beiden Ketten, wodurch das Pistenpflegefahrzeug sich um seine Hochachse dreht und hierdurch die Fahrtrichtung der Fahrbewegung ändert. Zur Bedienung solcher Doppelhebel-Anordnungen muss der Fahrer seinen gesamten Arm nach vorne und hinten bewegen, was auf Dauer unergonomisch ist.

Aus der EP 1 980 441 A1 ein Pistenpflegefahrzeug mit einem Steuerknüppel bekannt, der um wenigstens eine horizontale Schwenkachse und um eine vertikale Schwenkachse schwenkbeweglich ist, um Fahrfunktionen und/oder Zusatzfunktionen des Pistenpflegefahrzeugs zu steuern.

Aus der EP 3 054 367 A2 ist ein Pistenpflegefahrzeug mit einem Handsteuerhebel bekannt, der um wenigstens drei zueinander verschiedene Raumachsen drehbar angeordnet ist und einen Handauflagekörper aufweist, der zusätzlich um eine vierte Raumachse drehbeweglich gelagert ist.

Aufgabe der Erfindung ist es, ein Pistenpflegefahrzeug der eingangs genannten Art bereitzustellen, das Vorteile gegenüber dem Stand der Technik bietet. Im Speziellen soll ein besonders ergonomisches Lenken bei gleichzeitig besonders einfachem Aufbau der Lenkeinrichtung ermöglicht werden.

Diese Aufgabe wird dadurch gelöst, dass die Lenkeinrichtung einen Lenkhebel aufweist, der an einem Schwenklager um eine Schwenkachse schwenkbeweglich gelagert ist, wobei die Schwenkachse horizontal und entlang, vorzugsweise parallel zu, einer Längsachse des Pistenpflegefahrzeugs längserstreckt ist, wodurch der Lenkhebel zum Lenken der Fahrbewegung in einer vertikalen Schwenkebene ausgehend von einer Grundstellung nach links und nach rechts verschwenkt werden kann. Im Vergleich zu aus dem Stand der Technik bekannten Lösungen mit Lenkrad erlaubt die erfindungsgemäße Lösung eine verbesserte Sicht des Fahrers nach vorne sowie nach vorne unten. Weitere Vorteile sind die verbesserte Ergonomie sowie verbesserte Platzverhältnisse, da Lösungen mit Lenkrad üblicherweise eine zentral vor dem Fahrer in der Fahrerkabine platzierte Lenksäule aufweisen. Durch den Entfall der Lenksäule ergeben sich für den Fahrer verbesserte Platzverhältnisse in der Fahrerkabine, insbesondere ergibt sich ein vergrößerter Fußraum. Im Vergleich zu aus dem Stand der Technik bekannten Lösungen mit Doppelhebel-Anordnung wird eine deutlich verbesserte Ergonomie erreicht. Denn die erfindungsgemäße Lenkeinrichtung erlaubt ein Lenken der Fahrbewegung über eine einfache seitliche Schwenkbewegung des Lenkhebels, d. h. nach links und nach rechts. Um diese Bewegung des Lenkhebels auszuführen, muss der Fahrer nicht etwa seinen gesamten Arm nach vorne und hinten bewegen. Vielmehr kann der Arm in Längsrichtung unbewegt bleiben, wobei die Bewegung des Lenkhebels nach links und nach rechts allein über Bewegungen des Handgelenks ausgeführt werden kann. Hierdurch können die Schultern des Fahrers stets in einer Ebene parallel zu einer Rückenlehne des Fahrersitzes verbleiben, was maßgeblich zu einem verbesserten Fahrkomfort und zu der verbesserten Ergonomie beiträgt. Das Pistenpflegefahrzeug weist die besagte Längsachse und zudem eine Querachse und eine Hochachse auf. Die Längsachse, die Querachse und die Hochachse sind zueinander orthogonal. Die Schwenkachse ist entlang und damit wenigstens überwiegend in Richtung der Längsachse orientiert. Vorzugsweise ist die Schwenkachse parallel zu der Längsachse orientiert. Die Schwenkachse ist horizontal ausgerichtet und damit entlang der Querachse des Pistenpflegefahrzeugs orientiert. Vorzugsweise ist die Schwenkachse parallel zu der Querachse. Die aus dieser Orientierung der Schwenkachse resultierende Schwenkebene ist folglich vertikal und vorzugsweise parallel zu einer durch die Querachse und die Hochachse des Pistenpflegefahrzeugs aufgespannten Ebene.

**In** Ausgestaltung der Erfindung weist das Schwenklager die Schwenkbeweglichkeit um die Schwenkachse als einzigen Bewegungsfreiheitsgrad auf. Mit anderen Worten: Der Lenkhebel ist lediglich um die Schwenkachse schwenkbeweglich. Weitere Bewegungsfreiheitsgrade weist der Lenkhebel bei dieser Ausgestaltung nicht auf. Hierdurch ergibt sich ein besonders einfacher Aufbau.

**In** weiterer Ausgestaltung der Erfindung weist die Fahrerkabine eine Armauflage mit einer Auflagefläche auf, die zum Ablegen eines den Lenkhebel bedienenden Arms des Fahrers eingerichtet ist, wobei die Lenkeinrichtung eine Höheneinstelleinrichtung aufweist, die zum Einstellen eines vertikalen Abstands zwischen der Auflagefläche und der Schwenkachse eingerichtet ist. Durch die Einstellbarkeit des vertikalen Abstands mittels der Höheneinstelleinrichtung ergeben sich zusätzliche Vorteile. Durch die Höheneinstellbarkeit der Schwenkachse in Bezug auf die Armauflagefläche kann die Betätigungshaptik des Lenkhebels verändert werden. Zudem kann die Höheneinstellung individuell nach den ergonomischen Erfordernissen des Fahrers eingestellt werden. Vorzugsweise ist die Höheneinstelleinrichtung mit dem Schwenklager wirkverbunden und erlaubt eine einstellbare Positionierung der Schwenkachse entlang der Hochachse des Pistenpflegefahrzeugs. Die Höheneinstelleinrichtung kann grundsätzlich jede für diesen Zweck geeignete Gestaltung aufweisen und beispielsweise manuell oder motorisch antreibbar sein.

**In** weiterer Ausgestaltung der Erfindung weist die Lenkeinrichtung eine Winkeleinstelleinrichtung auf, die zum Einstellen eines horizontalen Winkels der Schwenkachse in Bezug auf die Lenkachse eingerichtet ist. Durch die Einstellbarkeit des horizontalen Winkels mittels der Winkeleinstelleinrichtung ergeben sich weitere Vorteile. Im Speziellen kann die horizontale Ausrichtung der Schwenkachse an die ergonomischen Bedürfnisse des Fahrers angepasst werden. Bei einer Ausgestaltung weist die Schwenkachse eine Grundwinkeleinstellung auf, in welcher sie parallel zur Längsachse ist. In dieser Grundwinkeleinstellung wird der zur Bedienung des Lenkhebels vorgesehene Unterarm des Fahrers regelmäßig ebenfalls parallel zur Längsachse ausgerichtet sein. Eine solche Haltung kann je nach Körperbau und individuellem Empfinden des Fahrers als unergonomisch wahrgenommen werden. Durch die Winkeleinstelleinrichtung kann der Fahrer den horizontalen Winkel der Schwenkachse ausgehend von der Grundwinkeleinstellung verändern. Beispielsweise kann die Schwenkachse horizontal nach innen oder nach außen geneigt werden, um eine entsprechende Ausrichtung des Unterarms zu ermöglichen. Vorzugsweise ist die Winkeleinstelleinrichtung mit dem Schwenklager wirkverbunden und erlaubt eine Anpassung der Orientierung des Schwenklagers. Die Winkeleinstelleinrichtung kann jede für diesen Zweck geeignete Gestaltung aufweisen. Bei einer Ausgestaltung ist die Winkeleinstelleinrichtung manuell antreibbar. Bei einer weiteren Ausgestaltung ist ein motorischer Antrieb vorgesehen.

**In** weiterer Ausgestaltung der Erfindung ist die Winkeleinstelleinrichtung dazu eingerichtet, den horizontalen Winkel der Schwenkachse ausgehend von einer parallel zu der Längsachse orientierten Grundwinkeleinstellung um wenigstens ± 10° einzustellen. Vorzugsweise ist eine Einstellung um ± 20° möglich. Es hat sich gezeigt, dass die vorgenannten Winkelbereiche für die Einstellbarkeit des horizontalen Winkels der Schwenkachse eine Anpassung an unterschiedlichste ergonomische Bedürfnisse erlauben.

**In** weiterer Ausgestaltung der Erfindung ist der Lenkhebel links des Fahrersitzes angeordnet. Es hat sich gezeigt, dass eine Bedienung mit der linken Hand für eine Vielzahl von Fahrern ergonomische Vorteile bietet. Dies umso mehr, als die rechte Hand des Fahrers oftmals mit der Steuerung und Funktionen eines Anbaugeräts und/oder von Zusatzfunktionen des Pistenpflegfahrzeugs befasst ist.

**In** weiterer Ausgestaltung der Erfindung weist das Pistenpflegefahrzeug einen Steuerhebel auf, der zum Steuern eines Anbaugeräts des Pistenpflegefahrzeugs eingerichtet und rechts des Fahrersitzes in der Fahrerkabine angeordnet ist. Bei dem mittels des Steuerhebels steuerbaren Anbaugerät handelt es sich beispielsweise um ein Frontschild, eine Heckfräse, eine Seilwinde oder dergleichen. Die betreffenden Anbaugeräte sind vorzugsweise abnehmbar an dem Pistenpflegefahrzeug angebracht oder anbringbar. Der Steuerhebel ist manuell zwischen unterschiedlichen Stellungen beweglich. Bei einer Ausgestaltung ist eine rotatorische Beweglichkeit um wenigstens eine Rotationsachse vorgesehen. Weitere Ausgestaltungen sehen eine Beweglichkeit um zwei, drei oder mehr als drei Rotationsachsen vor. Alternativ oder zusätzlich kann eine translatorische Beweglichkeit des Steuerhebels vorgesehen sein. Der Steuerhebel erlaubt keine Steuerung der Fahrbewegung, d. h. er ist nicht alternativ oder zusätzlich zum Lenken der Fahrbewegung eingerichtet. Diese Funktion kommt ausschließlich dem Lenkhebel zu.

**In** weiterer Ausgestaltung der Erfindung weist der Lenkhebel wenigstens ein Bedienelement auf, das zum Steuern wenigstens einer Zusatzfunktion des Pistenpflegefahrzeugs und/oder eines Anbaugeräts eingerichtet ist. Das wenigstens eine Bedienelement ist beispielsweise ein Taster, ein Schalter, ein Einstellrad, eine berührempfindliche Bedienfläche mit kapazitivem oder sonstigem Wirkprinzip oder dergleichen. Es versteht sich, dass auch mehr als ein Bedienelement vorgesehen sein kann, insbesondere mehrere unterschiedliche Bedienelemente. Bei einer Ausgestaltung ist das wenigstens eine Bedienelement an einem dem Schwenklager abgewandten oberen Ende des Lenkhebels angeordnet. Bei einer weiteren Ausgestaltung ist das wenigstens eine Bedienelement zwar dem Lenkhebel zugeordnet, aber abseits desselben angeordnet, beispielsweise im Bereich oder an der Armauflage. Bei einer Ausgestaltung dient das wenigstens eine Bedienelement zum Steuern eines Beschleunigungsverhaltens des Pistenpflegefahrzeugs. Bei einer weiteren Ausgestaltung dient das wenigstens eine Bedienelement einem Steuern des wenigstens einen Anbaugeräts.

**In** weiterer Ausgestaltung der Erfindung weist die Lenkeinrichtung eine Rückstelleinrichtung auf, die ein in Richtung der Grundstellung um die Schwenkachse wirkendes Rückstellmoment auf den Lenkhebel ausübt, sobald der Lenkhebel aus der Grundstellung nach links oder rechts verschwenkt wird. Die Rückstelleinrichtung dient demnach einer selbsttätigen Rückstellung des Lenkhebels in die Grundstellung. Selbsttätig meint, dass kein Zutun des Fahrers hierfür erforderlich ist. Bei einer Ausgestaltung ist die Rückstelleinrichtung mit dem Schwenklager wirkverbunden. Vorzugsweise erzeugt die Rückstelleinrichtung hierbei ein im Bereich der Schwenkachse wirkendes Rückstellmoment, beispielsweise mittels einer Drehfeder oder einem sonstigen elastischen Element. Alternativ oder zusätzlich kann das Rückstellelement mittels eines Aktors erzeugt werden. Bei einer weiteren Ausgestaltung ist die Rückstelleinrichtung mit dem Lenkhebel wirkverbunden. Vorzugsweise erzeugt die Rückstelleinrichtung hierbei eine abseits der Grundstellung auf den Lenkhebel wirkende Rückstellkraft, die über einen sich ergebenden Hebelarm das Rückstellmoment um die Schwenkachse erzeugt. Die besagte Rückstellkraft kann über eine Feder oder ein sonstiges elastisches Element erzeugt werden. Alternativ oder zusätzlich kann die Rückstellkraft mit einem Aktor erzeugt werden.

**In** weiterer Ausgestaltung der Erfindung weist die Lenkeinrichtung keine Rückstelleinrichtung auf. Hierdurch ergibt sich ein besonders einfacher Aufbau der Lenkeinrichtung.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.

Es zeigen:
- Fig. 1: in schematischer Seitenansicht eine Ausführungsform eines erfindungsgemäßen Pistenpflegefahrzeugs,
- Fig. 2: das Pistenpflegefahrzeug nach Fig. 1 in einer schematischen Aufsicht in vereinfachter Blockdarstellung, wobei insbesondere ein Innenraum einer Fahrerkabine mit einem Fahrersitz und einer Lenkeinrichtung gezeigt sind,
- Fig. 3, 4: die Lenkeinrichtung in schematischen, teilweise abgeschnittenen Seitenansichten und zur Verdeutlichung der Funktion einer Höheneinstelleinrichtung,
- Fig. 5: die Fahrerkabine des Pistenpflegefahrzeugs in schematischer Aufsicht in vereinfachter Blockdarstellung und zur Verdeutlichung der Funktion einer Winkeleinstelleinrichtung der Lenkeinrichtung,
- Fig. 6: die Lenkeinrichtung in einer schematischen Rückansicht in vereinfachter Blockdarstellung zur Verdeutlichung der Funktion einer Rückstelleinrichtung der Lenkeinrichtung,
- Fig. 7: die Lenkeinrichtung mitsamt einer Armauflage in einer schematischen Perspektivansicht und
- Fig. 8: in schematischer Perspektivansicht eine Ausführungsform eines Lenkhebels der Lenkeinrichtung.

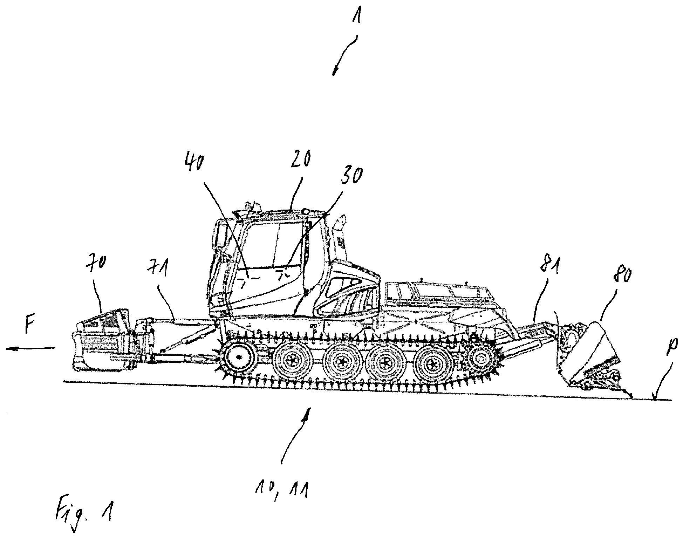

Gemäß Fig. 1 ist ein Pistenpflegefahrzeug 1 zum Pflegen einer Schneepiste P vorgesehen. Das Pistenpflegefahrzeug 1 kann auch als Pistenraupe bezeichnet werden (englisch: snow groomer).

Das Pistenpflegefahrzeug 1 weist ein Antriebssystem 10, eine Fahrerkabine 20, einen Fahrersitz 30 und eine Lenkeinrichtung 40 auf, wobei der Fahrersitz 30 und die Lenkeinrichtung 40 jeweils in der Fahrerkabine 20 angeordnet sind.

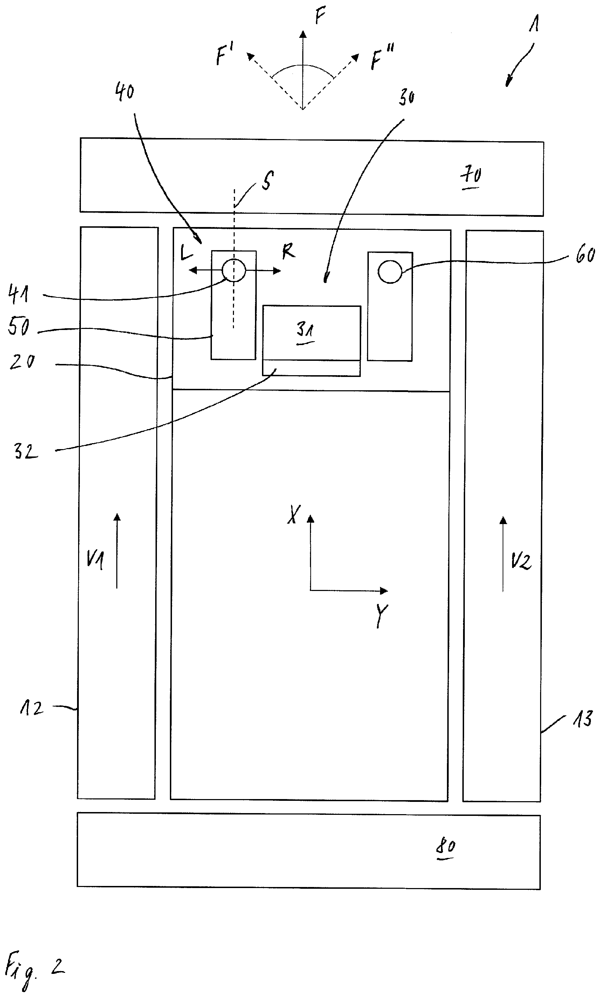

**In** Fig. 1 sind der Fahrersitz 30 und die Lenkeinrichtung 40 nicht im Detail ersichtlich. Weitere Details werden nachfolgend noch unter Bezugnahme auf die weiteren Fig. 2 bis 8 erläutert.

Das Antriebssystem 10 weist ein Kettenfahrwerk 11 auf, das bei der gezeigten Ausführungsform zwei Ketten 12, 13 aufweist (siehe Fig. 2). Die beiden Ketten 12, 13 können auch als linke Kette 12 und rechte Kette 13 bezeichnet werden. Das Antriebssystem 10 mit dem Kettenfahrwerk 11 ist auf eine der Fachperson bekannte Weise zum Erzeugen einer Fahrbewegung F über die Schneepiste P eingerichtet.

Die Fahrerkabine 20 weist den Fahrersitz 30 und die Lenkeinrichtung 40 auf (siehe auch Fig. 2). Die Lenkeinrichtung 40 ist seitlich des Fahrersitzes 30 angeordnet. Der Fahrersitz 30 weist einen üblichen Aufbau mit einer Sitzfläche 31 und einer Rückenlehne 32 auf. Die Lenkeinrichtung 40 ist zum manuellen Lenken der Fahrbewegung F durch den Fahrer des Pistenpflegefahrzeugs 1 eingerichtet.

Bei der gezeigten Ausführungsform weist das Pistenpflegefahrzeug 1 Anbaugeräte auf, nämlich ein frontseitig angeordnetes Räumschild 70 und eine heckseitig angeordnete Heckfräse 80. Das Räumschild 70 und die Heckfräse 80 sind jeweils optional. Das Räumschild 70 und die Heckfräse 80 sind auf eine der Fachperson bekannte Weise mittels entsprechender Stellzylinderanordnungen 71, 81 stellbeweglich an dem Pistenpflegefahrzeug 1 angebracht.

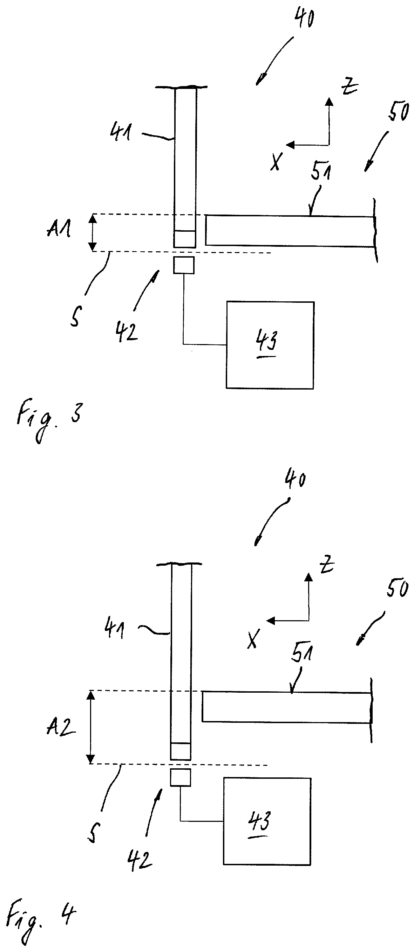

Die Lenkeinrichtung 40 weist einen Lenkhebel 41 auf, der an einem Schwenklager 42 (siehe auch Fig. 3, 4, 6, 7) um eine Schwenkachse S schwenkbeweglich gelagert ist.

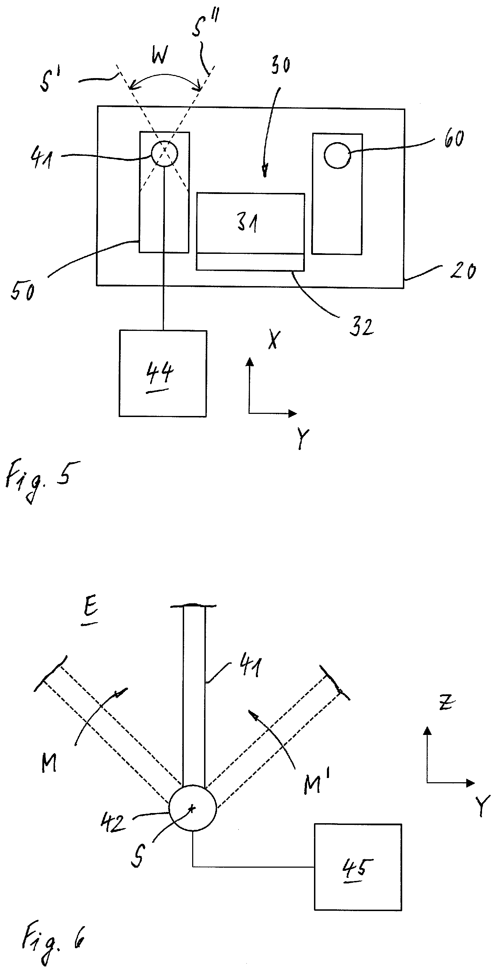

Die Schenkwachse S ist horizontal und entlang einer Längsachse X des Pistenpflegefahrzeugs 1 längserstreckt. Der Lenkhebel 41 kann zum Lenken der Fahrbewegung F in einer vertikalen Schwenkebene E (siehe Fig. 6) ausgehend von einer Grundstellung nach links L und nach rechts R verschwenkt werden.

Bei der gezeigten Ausführungsform ist die Schwenkachse S in der in Fig. 2 gezeigten Konfiguration parallel zu der Längsachse X.

Das Pistenpflegefahrzeug 1 weist zudem eine Querachse Y und eine Hochachse Z auf, wobei die Längsachse X, die Querachse Y und die Hochachse Z orthogonal zueinander sind.

Die Lenkeinrichtung 40 ist in Bezug auf die Querachse Y seitlich des Fahrersitzes 30 angeordnet.

Die Schwenkachse S ist vorliegend zudem horizontal orientiert. Horizontal meint, dass die Schwenkachse S entlang, vorliegend parallel zu, einer durch die Längsachse X und die Querachse Y aufgespannten Ebene orientiert ist. Die vertikale Schwenkebene E ist in der in Fig. 2 gezeigten Konfiguration parallel zu einer durch die Hochachse Z und die Querachse Y aufgespannten Ebene orientiert.

**In** der besagten Grundstellung ist der Lenkhebel 41 bei der gezeigten Ausführungsform parallel zu der Hochachse Z ausgerichtet und längserstreckt. Ausgehend von der Grundstellung kann die Fahrbewegung F nach links gesteuert werden, indem der Lenkhebel 41 nach links L um die Schwenkachse S verschwenkt wird. Hierdurch wird die ursprünglich gerade nach vorne und parallel zur Längsachse X orientierte Fahrbewegung F in eine nach links gerichtete Fahrbewegung F' gesteuert. Entsprechendes gilt sinngemäß für eine Änderung der Fahrbewegung nach rechts, d. h. in eine nach rechts gerichtete Fahrbewegung F". Hierfür wird der Lenkhebel 41 ausgehend von der Grundstellung nach rechts R um die Schwenkachse S verschwenkt.

Wie in Fig. 2 gezeigt ist, ist die Schwenkachse S in Bezug auf die Querachse Y seitlich versetzt zu dem Fahrersitz 30, im Speziellen zu der Sitzfläche 31 und/oder der Rückenlehne 32. **In** Bezug auf die Längsachse X ist der Lenkhebel 41 vor dem Fahrersitz 30 angeordnet, im Speziellen vor der Sitzfläche 31.

Durch das besagte Verschwenken des Lenkhebels 41 nach links L oder nach rechts R können vorliegend Geschwindigkeiten V1, V2 der beiden Ketten 12, 13 entsprechend verändert werden, um die erwähnte Richtungsänderung der Fahrbewegung F zu erzeugen. Durch ein Verschwenken nach links L wird die Geschwindigkeit V1 der linken Kette 12 relativ zu der Geschwindigkeit V2 der rechten Kette 13 verringert, um die Fahrbewegung F' zu erzeugen. Entsprechendes gilt umgekehrt für ein Verschwenken des Lenkhebels 41 nach rechts R.

Bei der gezeigten Ausführungsform weist das Schwenklager 42 lediglich einen einzigen Bewegungsfreiheitsgrad auf. Folglich ist der Lenkhebel 41 ausschließlich um die Schwenkachse S schwenkbeweglich. Weitere Beweglichkeiten sind nicht möglich.

Bei der gezeigten Ausführungsform weist die Fahrerkabine 20 zudem eine Armauflage 50 mit einer Armauflagefläche 51 auf. Die Auflagefläche 51 ist zum Ablegen eines den Lenkhebel 41 bedienenden Arms, im Speziellen Unterarms, des Fahrers eingerichtet. Die Armauflage 50 ist vorliegend in rückwärtiger Verlängerung der Lenkeinrichtung 40 seitlich des Fahrersitzes 30 angeordnet. Die Armauflage 50 ist parallel zur Längsachse X längserstreckt.

Bei der gezeigten Ausführungsform weist die Lenkeinrichtung 40 eine Höheneinstelleinrichtung 43 auf (siehe Fig. 3, 4), die zum Einstellen eines vertikalen Abstands A1, A2 zwischen der Auflagefläche 51 und der Schwenkachse S eingerichtet ist. In Fig. 3 ist eine erste Konfiguration gezeigt, in der ein erster vertikaler Abstand A1 eingestellt ist. In Fig. 4 ist eine zweite Konfiguration gezeigt, in der ein zweiter vertikaler Abstand A2 eingestellt ist. Der zweite vertikale Abstand A2 ist vorliegend größer als der erste vertikale Abstand A1. Die Höheneinstelleinrichtung 43 ist in den Fig. 3 und 4 schematisch vereinfacht als Funktionsblock dargestellt. Vorliegend ist die Höheneinstelleinrichtung 43 mit dem Schwenklager 42 wirkverbunden, um die besagte Einstellung des vertikalen Abstands A1, A2 der Schwenkachse S zu ermöglichen. Dabei ist vorliegend ist eine stufenlose Einstellbarkeit vorgesehen, wobei der erste vertikale Abstand A1 als Minimalwert und der zweite vertikale Abstand A2 als Maximalwert angesehen werden können. Bei einer weiteren Ausführungsform ist eine schrittweise Einstellbarkeit vorgesehen.

Bei der gezeigten Ausführungsform weist die Lenkeinrichtung 40 zudem eine Winkeleinstelleinrichtung 44 auf (siehe Fig. 5). Die Winkeleinstelleinrichtung 44 ist zum Einstellen eines horizontalen Winkels W der Schwenkachse S in Bezug auf die Längsachse X eingerichtet. Dabei ist in Fig. 2 eine Grundwinkeleinstellung der Schwenkachse S gezeigt. In dieser Grundwinkeleinstellung ist die Schwenkachse S parallel zu der Längsachse X. Ausgehend von dieser Grundwinkeleinstellung kann die Schwenkachse S mittels der Winkeleinstelleinrichtung 44 vorliegend um ± 20° verstellt werden zwischen einer Ausrichtung S' und einer Ausrichtung S". In der Ausrichtung S' weist die Schwenkachse S in Bezug auf die Längsachse X nach außen und vorne. In der Ausrichtung S" weist die Schwenkachse S in Bezug auf die Längsachse X nach vorne innen.

Die Winkeleinstelleinrichtung 44 ist in Fig. 5 schematisch stark vereinfacht als Funktionsblock dargestellt. Vorliegend ist die Winkeleinstelleinrichtung 44 mit dem Schwenklager 42 wirkverbunden, um die besagte Einstellbarkeit des horizontalen Winkels W zu ermöglichen.

Bei der gezeigten Ausführungsform weist die Lenkeinrichtung 40 zudem eine Rückstelleinrichtung 45 auf (siehe Fig. 6). Die Rückstelleinrichtung 45 ist dazu eingerichtet, ein in Richtung der Grundstellung (Lenkhebel 41 parallel zu Hochachse Z) um die Schwenkachse S wirkendes Rückstellmoment M, M' auf den Lenkhebel 41 auszuüben, sobald dieser aus der Grundstellung nach links L oder nach rechts R verschwenkt wird. Infolge des Rückstellmoments M, M' kehrt der Lenkhebel 41 selbsttätig in die Grundstellung zurück, sobald der Fahrer den Lenkhebel 41 loslässt. Zudem muss der Fahrer ausgehend von der Grundstellung gegen das Rückstellmoment M, M' anarbeiten, um eine entsprechende Schwenkbewegung des Lenkhebels 41 vorzunehmen. Bei einem Verschwenken nach links L wirkt vorliegend ein im Uhrzeigersinn um die Schwenkachse S gerichtetes Rückstellmoment M. Bei einem Verschwenken nach rechts R wirkt ein entgegen dem Uhrzeigersinn wirkendes Rückstellmoment M'.

Die Rückstelleinrichtung 45 ist in Fig. 6 schematisch stark vereinfacht als Funktionsblock dargestellt. Bei einer Ausgestaltung weist die Rückstelleinrichtung eine Drehfeder auf, die im Bereich der Schwenkachse S an dem Schwenklager 42 angreift, um das Rückstellmoment M, M' zu erzeugen. Bei einer weiteren Ausgestaltung weist die Rückstelleinrichtung 45 eine oder mehrere Federn auf, die an dem Lenkhebel 41 angreifen, um eine Rückstellkraft zu erzeugen, die über einen sich relativ zu der Schwenkachse S ergebenden Hebelarm das Rückstellmoment M, M' erzeugt.

Es versteht sich, dass die Höheneinstelleinrichtung 43, die Winkeleinstelleinrichtung 44 und die Rückstelleinrichtung 45 bei unterschiedlichen Ausgestaltungen einzeln oder in beliebiger Kombination vorhanden sein können.

Bei der gezeigten Ausführungsform weist das Pistenpflegefahrzeug 1 zudem einen Steuerhebel 60 auf, der in der Fahrerkabine 20 angeordnet ist und zum Steuern des Räumschilds 70 und/oder der Heckfräse 80 dient (siehe Fig. 2). Der Steuerhebel 60 ist vorliegend rechts des Fahrersitzes 30 angeordnet. Der Steuerhebel 60 ist auf eine vorliegend nicht näher gezeigte Weise zwischen unterschiedlichen Stellungen beweglich, um wenigstens eine Funktion des Räumschilds 70 und/oder der Heckfräse 80 zu steuern. Die Beweglichkeit kann translatorisch und/oder rotatorisch sein. Denkbar ist zudem eine schwenkbewegliche Verlagerbarkeit des Steuerhebels 60 um eine, zwei oder mehr als zwei Raumachsen.

Der Steuerhebel 60 wird mit der rechten Hand und der Lenkhebel 41 mit der linken Hand des Fahrers bedient.

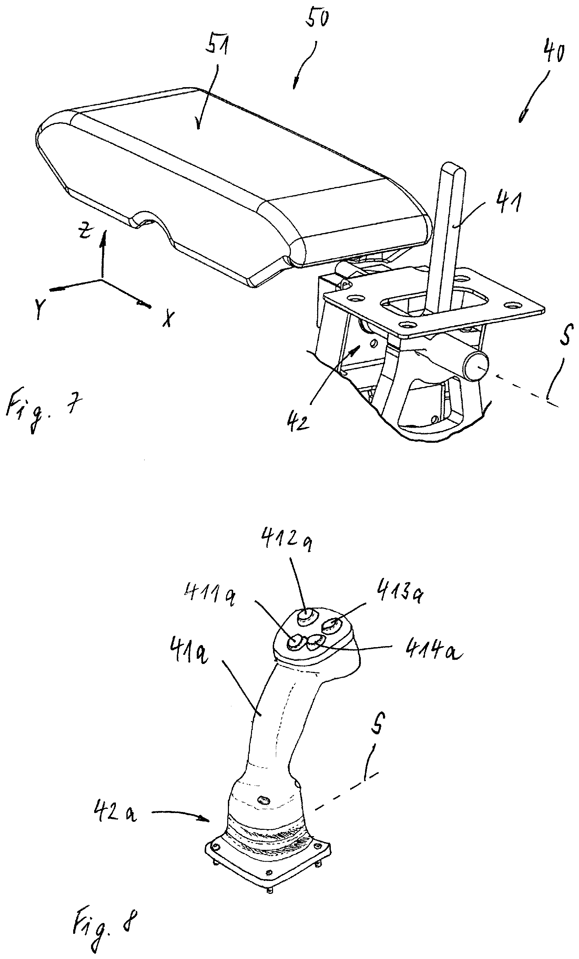

In Fig. 7 sind weitere Details der Lenkeinrichtung 40 und der Armauflage 50 ersichtlich. In der in Fig. 7 gezeigten Konfiguration nimmt der Schwenkhebel 41 die Grundstellung ein und ist folglich parallel zur Hochachse Z längserstreckt. Zudem nimmt die Schwenkachse S die besagte Grundwinkeleinstellung ein und ist parallel zur Längsachse X orientiert.

In Fig. 8 ist eine weitere Ausführungsform eines Lenkhebels 41a gezeigt, der anstelle des Lenkhebels 41 verwendet werden kann. Der grundlegende Aufbau und die Funktion des Lenkhebels 41a sind im Wesentlichen identisch mit dem Lenkhebel 41. Nachfolgend wird lediglich auf wesentliche Unterschiede eingegangen. Im Übrigen gilt für den Lenkhebel 41a mutatis mutandis das zu dem Lenkhebel 41 Offenbarte.

**Im** Unterschied zu dem Lenkhebel 41 weist der Lenkhebel 41a mehrere Bedienelemente 411a bis 414a auf, die auch als erstes Bedienelement 411a, zweites Bedienelement 412a, drittes Bedienelement 413a und viertes Bedienelement 414a bezeichnet werden können. Die Bedienelemente 411a bis 414a sind zum Steuern wenigstens einer Zusatzfunktion des Pistenpflegefahrzeugs 1 und/oder des Anbaugeräts 70, 80 eingerichtet. Dabei ist eine Belegung der Bedienelemente 411a bis 414a variabel und/oder frei belegbar. Vorliegend sind die Bedienelemente 411a bis 414a an einem oberen Ende des Lenkhebels 41a angeordnet und zur Bedienung mit dem Daumen eingerichtet. Bei den Bedienelementen 411a bis 414a handelt es sich vorliegend um Drucktasten. Alternativ oder zusätzlich ist eine Ausgestaltung als Schalter, Drehrad und/oder berührungsempfindliche Fläche möglich. Das besagte obere Ende des Lenkhebels 41a ist der Schwenkachse S in Längsrichtung des Lenkhebels 41a abgewandt.

Bei der in Fig. 8 gezeigten Ausführungsform ist das Schwenklager 42a als elastischer Gelenkkörper gestaltet, wobei die Schwenkbeweglichkeit um die Schwenkachse S wiederum als einziger Bewegungsfreiheitsgrad vorgesehen ist.

## Patentansprüche

1. Pistenpflegefahrzeug (1) zum Pflegen einer Schneepiste (P), aufweisend
ein Antriebssystem (10) mit einem Kettenfahrwerk (11), das zum Erzeugen einer Fahrbewegung (F) eingerichtet ist,
eine Fahrerkabine (20) mit einem Fahrersitz (30) und einer Lenkeinrichtung (40), die seitlich des Fahrersitzes (30) angeordnet und zum manuellen Lenken der Fahrbewegung (F) durch einen Fahrer eingerichtet ist,
**dadurch gekennzeichnet, dass** die Lenkeinrichtung (40) einen Lenkhebel (41, 41a) aufweist, der an einem Schwenklager (42, 42a) um eine Schwenkachse (S) schwenkbeweglich gelagert ist, wobei die Schwenkachse (S) horizontal und entlang, vorzugsweise parallel zu, einer Längsachse (X) des Pistenpflegefahrzeugs (1) längserstreckt ist, wodurch der Lenkhebel (41, 41a) zum Lenken der Fahrbewegung (F) in einer vertikalen Schwenkebene (E) ausgehend von einer Grundstellung nach links (L) und nach rechts (R) verschwenkt werden kann.

2. Pistenpflegefahrzeug (1) nach Anspruch 1, wobei das Schwenklager (42, 42a) die Schwenkbeweglichkeit um die Schwenkachse (S) als einzigen Bewegungsfreiheitsgrad aufweist.

3. Pistenpflegefahrzeug (1) nach Anspruch 1 oder 2, wobei die Fahrerkabine (20) eine Armauflage (50) mit einer Armauflagefläche (51) aufweist, die zum Ablegen eines den Lenkhebel (41, 41a) bedienenden Arms des Fahrers eingerichtet ist, und wobei die Lenkeinrichtung (40) eine Höheneinstelleinrichtung (43) aufweist, die zum Einstellen eines vertikalen Abstands (A1, A2) zwischen der Auflagefläche (51) und der Schwenkachse (S) eingerichtet ist.

4. Pistenpflegefahrzeug (1) nach einem der vorhergehenden Ansprüche, wobei die Lenkeinrichtung (40) eine Winkeleinstelleinrichtung (44) aufweist, die zum Einstellen eines horizontalen Winkels (W) der Schwenkachse (S) in Bezug auf die Längsachse (X) eingerichtet ist.

5. Pistenpflegefahrzeug (1) nach Anspruch 4, wobei die Winkeleinstelleinrichtung (44) dazu eingerichtet ist, den horizontalen Winkel (W) der Schwenkachse (S) ausgehend von einer parallel zu der Längsachse (X) orientierten Grundwinkeleinstellung um wenigstens ±10°, vorzugsweise ± 20°, einzustellen.

6. Pistenpflegefahrzeug (1) nach einem der vorhergehenden Ansprüche, wobei der Lenkhebel (41, 41a) links des Fahrersitzes (30) angeordnet ist.

7. Pistenpflegefahrzeug (1) nach einem der vorhergehenden Ansprüche, weiter aufweisend einen Steuerhebel (60), der zum Steuern eines Anbaugeräts (70, 80) des Pistenpflegefahrzeugs (1) eingerichtet und rechts des Fahrersitzes (30) in der Fahrerkabine (20) angeordnet ist.

8. Pistenpflegefahrzeug (1) nach einem der vorhergehenden Ansprüche, wobei der Lenkhebel (41, 41a) wenigstens ein Bedienelement (411a bis 414a) aufweist, das zum Steuern wenigstens einer Zusatzfunktion des Pistenpflegefahrzeugs (1) und/oder eines Anbaugeräts (70, 80) eingerichtet ist.

9. Pistenpflegefahrzeug (1) nach einem der vorhergehenden Ansprüche, wobei die Lenkeinrichtung (40) eine Rückstelleinrichtung (45) aufweist, die ein in Richtung der Grundstellung um die Schwenkachse (S) wirkendes Rückstellmoment (M, M') auf den Lenkhebel (41, 41a) ausübt, sobald der Lenkhebel (41, 41 a) aus der Grundstellung nach links (L) oder rechts verschwenkt (R) wird.

10. Pistenpflegefahrzeug (1) nach einem der Ansprüche 1 bis 8, wobei die Lenkeinrichtung (40) keine Rückstelleinrichtung (45) aufweist.
